(19) Europäisches Patentamt / European Patent Office / Office européen des brevets

(11) **EP 4 216 387 A1**

(12) **EUROPÄISCHE PATENTANMELDUNG**

(43) Veröffentlichungstag:
     **26.07.2023   Patentblatt 2023/30**

(21) Anmeldenummer: **22152566.0**

(22) Anmeldetag: **20.01.2022**

(51) Internationale Patentklassifikation (IPC):
     **H02H 9/02** (2006.01)    **H02H 3/05** (2006.01)
     **H02H 3/087** (2006.01)   **H02H 3/02** (2006.01)

(52) Gemeinsame Patentklassifikation (CPC):
     **H02H 9/025; H02H 3/025;** H02H 3/006; H02H 3/05;
     H02H 3/087; H02H 7/008

(84) Benannte Vertragsstaaten:
     **AL AT BE BG CH CY CZ DE DK EE ES FI FR GB
     GR HR HU IE IS IT LI LT LU LV MC MK MT NL NO
     PL PT RO RS SE SI SK SM TR**
     Benannte Erstreckungsstaaten:
     **BA ME**
     Benannte Validierungsstaaten:
     **KH MA MD TN**

(71) Anmelder: **Siemens Aktiengesellschaft**
     **80333 München (DE)**

(72) Erfinder: **Troyer, Markus**
     **3040 Neulengbach (AT)**

(74) Vertreter: **Siemens Patent Attorneys**
     **Postfach 22 16 34**
     **80506 München (DE)**

(54) **ELEKTRONISCHE SCHALTUNGSANORDNUNG ZUR STROMBEGRENZUNG**

(57)     Die Erfindung betrifft eine elektronische Schaltungsanordnung zur Strombegrenzung in einem Laststromkreis, mit einem zwischen einer Versorgungsspannung und einer Last angeordneten Leistungshalbleiter (M1), dessen Steuereingang mit dem Ausgang einer Reglerstufe (RS) und einem Schaltkontakt eines Schutzschalters verbunden ist, wobei in den Laststromkreis ein Shunt-Widerstand (R1) eingefügt ist und die daran auftretende Spannung das Spannungspotential am Steuereingang des Schutzschalters erhöht, dass mit dem Steuereingang des Schutzschalters weiterhin eine Stromquelle (SQ) verbunden ist, welche über einen Vorwiderstand (R2) eine Vorspannung am Steuereingang des Schutzschalters (Q1) erzeugt und dass die Stromquelle (SQ) einen negativen Temperaturkoeffizienten aufweist.

FIG 1

**Beschreibung**

Die Erfindung betrifft eine elektronische Schaltungsanordnung zur Strombegrenzung.

Elektronische Strombegrenzungsschaltungen können im Gegensatz zu Schmelzsicherungen oder thermomagnetischen Auslösern so ausgelegt werden, dass der maximal auftretende Kurzschlussstrom begrenzt wird. In industriellen Gleichstromanlagen, im speziellen bei Steuerspannungsversorgungen mit Kleinspannung, ist diese Kurzschlussstrombegrenzung eine Möglichkeit, um die Selektivität mehrkanaliger Sicherungen zu gewährleisten. Insbesondere im Betrieb mit taktenden Stromversorgungen steht für einen Kurzschluss weit weniger Energie zur Verfügung als vergleichsweise im Netzbetrieb. Eine Auswirkung dieser eingeschränkten Verfügbarkeit an Energie kann beispielsweise ein Zusammenbruch der Versorgungsspannung sein, sodass ein Fehler in einem Kanal die gesamte Anlage betrifft. Um die Anlagenverfügbarkeit zu erhöhen, wurden daher Schaltungen entwickelt mit dem Zweck, den maximal auftretenden Kurzschlussstrom zu begrenzen (linear begrenzende elektronische Sicherungen), oder aber, in der Kurzschlussdauer zu reduzieren (schaltende elektronische Sicherungen).

In der Praxis haben sich elektronische Sicherungen als sog. HighSide Schalter etabliert, da es in Anlagen üblich ist eine gemeinsame Masse zu verwenden und die Lasten einpolig damit zu verbinden. Somit verbleibt für die Absicherung nur die positive Versorgungsspannung. Dies bedeutet, dass das Leistungsbauteil, zur linearen Begrenzung oder Abschaltung, zwischen der Stromversorgung und der Last geschaltet wird. Hierbei gilt besonderes Augenmerk der Vermeidung übermäßiger Verlustleistung in den Begrenzungselementen wie bspw. Transistoren, welche als Schaltelement eingesetzt werden.

Der Vorteil von linear begrenzenden Schaltungen ist der in jeder Überlastsituation definierbare Strom. Nachteile sind der komplexe Schaltungsaufwand und die damit einhergehenden Kosten. Demgegenüber besteht der Vorteil schaltender Topologien in einem reduzierten Schaltungsaufwand, da die Behandlung von Überlastströmen großteils von einem Mikrocontroller (pC) übernommen wird und/oder in IC-Bausteinen integriert ist, wie beispielsweise in Bauelemente des Typs BTS6143 von Infineon.

Der Nachteil dieser Schaltungen ist die prinzipbedingte Auslöseverzögerung, welche einen undefinierten Überlaststrom zur Folge haben kann. In Extremsituationen, wie Kurzschlüsse sie darstellen, können die auftretenden Kurzschlussströme ungewollte Effekte mit Folgen für die gesamte Anlage verursachen.

Es ist daher sinnvoll, die Vorteile des definierbaren Kurzschlussstroms der linear begrenzenden Topologien mit den Vorteilen schaltender Geräte zu verbinden.

Ein Ansatz ist, wie in begrenzenden Schaltungen einen Leistungstransistor, beispielsweise einen MOSFET, bei Überschreiten einer einstellbaren Stromschwelle vom Leitungsbetrieb in den Linearbetrieb zu schalten und den auftretenden Kurzschluss- bzw. Überlaststrom kontrolliert zu begrenzen.

Im Gegensatz zu begrenzenden Schaltungen werden der Kurzschluss bzw. die Überlast nur für eine kurze Dauer begrenzt. Die Begrenzung des Stroms und die Reduktion der zeitlichen Dauer, stellen eine geringere Belastung für den Leistungshalbleiter dar und werden der SOA (Safe Operating Area) des Leistungshalbleiters angepasst, sodass es zu keinen Halbleiter-internen Überhitzungen kommen kann, welche die maximal zulässige Temperatur des Halbleiters übersteigen. Damit kann im Vergleich zu den aus der WO 2002 082611 A2 bekannten Schaltungen auf Zusatzmaßnahmen wie einen Parallelzweig samt Leistungswiderstand verzichtet werden, wodurch der Schaltungsaufwand erheblich verringert wird.

Der Verzicht auf begrenzende passive Komponenten, wie den Leistungswiderstand im Parallelzweig und die zugehörigen Umschaltmechanismen stellt gewisse Anforderungen an die Regelschaltung.

Leistungshalbleiter wie MOSFET sind im Leitungsbetrieb sehr niederohmig und verursachen sehr geringe Verluste.

Unvorhersehbare Überlastereignisse wie ein Kurzschluss verursachen auf Grund der niederohmigen Transistoren sehr schnell hohe Ströme, welche das Leistungsbauteil zerstören können, sofern der Begrenzungsbetrieb erst mit einer Zeitverzögerung im Bereich mehrerer 100ns oder im $\mu$s-Bereich einsetzt.

Um dies zu vermeiden, müssen die Regler sehr schnell auf derartige Störungen reagieren, um rechtzeitig in den Begrenzungsbetrieb zu wechseln, ohne dass der Leistungshalbleiter Schaden nimmt.

In der Praxis stellt eine entsprechende Auslegung des Reglers und des Halbleiters eine Herausforderung dar. Einerseits sind Regelschaltungen typisch mittels Operationsverstärkern aufgebaut, welche nicht beliebig schnelle Reaktionszeiten zulassen.

Zudem weisen für den Linearbetrieb geeignete Leistungshalbleiter vergleichbar langsame Schaltzeiten auf, wodurch es bei der Reaktion auf Kurzschlussereignisse zu weiteren Verzögerungen kommen kann. Die daraus resultierende Trägheit führt dazu, dass der Leistungshalbleiter durch Überlast gefährdet ist, oder auch das Ziel der Kurzschlussstrombegrenzung und die Vermeidung von Rückwirkungen auf die Anlage verfehlt wird.

Um die Anforderungen an die Regelschaltung gering zu halten ist es bekannt, im Moment des Auftretens des Kurzschlusses einen Spitzenwert des Kurzschlussstroms $I_{KS,max}$ für eine kurze Dauer, typisch <10ps, zugelassen, sodass es zu keiner nennenswerten Beeinflussung der Anlage kommt, da die Energie beispielsweise aus den Kondensatoren - meist Elektrolytkondensatoren - der Stromversorgung zur Verfügung gestellt werden kann.

Anschließend wird der Strom auf einen einstellbaren Wert (typisch 1,5...2 $I_{Nenn}$) zurückgeregelt und durch den Regler konstant begrenzt. Um den Transistor in diesem Betriebszustand nicht zu gefährden, wird, der SOA des Halbleiters entsprechend, nach einer Verweildauer von wenigen ms im Linearbetrieb durch eine übergeordnete Überwachungseinrichtung, bspw. einen Mikrocontroller, abgeschaltet.

Dabei kann das Auftreten eines Spitzenwerts des Kurzschlussstroms mit vertretbarem Schaltungsaufwand kaum bis gar nicht vermieden werden.

Daher ist es notwendig die Ansteuerung des Transistors, um Schaltungsteile zu erweitern, die die begrenzte Reaktionsfähigkeit des Operationsverstärkers und der zugehörigen Regelschaltung kompensiert. Aus der Literatur [Tietze, Schenk; "Halbleiter Schaltungstechnik", Springer Verlag] sind Kurzschlussschutz- bzw. Überlastschutzschaltungen auf Basis von Dioden oder Bipolartransistoren (BJT) für Leistungshalbleiter bekannt, welche aber in der Praxis gewisse Unzulänglichkeiten aufweisen, sodass sie nur unter bestimmten Bedingungen eingesetzt werden können. Das Prinzip dieser Schutzschaltungen beruht darauf, dass an einem am Schaltungsausgang befindlichen Messwiderstand (Shunt) eine stromproportionale Spannung abgegriffen wird, sodass beim Überschreiten einer Schwellspannung (meist ganzzahlige Vielfache von 0,7V bei Siliziumhalbleiter) das Ansteuersignal des Leistungsbauteils (Basisstrom bei BJT, bzw. Gate-Source Spannung bei FET) kurzgeschlossen wird.

Dabei stellt die Dimensionierung dieser Schutzschaltungen eine Herausforderung dar, da die hierfür notwendigen Messwiderstände am Schaltungsausgang niederohmig gewählt sein müssen, um die Verlustleistung in Grenzen zu halten. Werte im mΩ Bereich sind hierbei wünschenswert, aber nachteilig für die Auslegung der Schutzschaltung.

Durch den niederohmigen Messwiderstand sind verhältnismäßig hohe Ströme notwendig, um die zur Auslösung der Schutzschaltung benötigten Schwellspannungen zu erreichen. Bei Aufbau der Schutzschaltung mit Bipolartransistoren kann diesem Umstand durch eine Vorspannung begegnet werden. Dadurch wird der notwendige Spannungsabfall am Messwiderstand deutlich reduziert, um die Auslöseschwelle zu erreichen. In diesem Lösungsansatz tritt die Temperaturabhängigkeit im hohen Maße in den Vordergrund. Die Schwellspannung von Siliziumhalbleitern sinkt mit -2mV/K, sodass auch die Auslöseschwelle der Schutzschaltung sinkt. Bei hohen Betriebstemperaturen kann es zu einem verfrühten Eingreifen kommen und unerwünschte Effekte bis hin zur Zerstörung des Leistungshalbleiters führen, etwa weil die Strombegrenzung im normalen Leitungsbetrieb bereits eingreift und der Transistor einen unnötigen Spannungsabfall und damit eine hohe Dauer-Verlustleistung aufbaut, worauf die Kühlung nicht ausgelegt ist. Darüber hinaus besteht in einer für hohe Betriebstemperaturen (60°C) günstige Auslegung die Gefahr, dass der Leistungshalbleiter bei tiefen Betriebstemperaturen (<< 25°C) nicht ausreichend geschützt wird, da auf viel zu hohe Ströme begrenzt wird, die im Halbleiter auch bei nur kurzzeitigem Betrieb zu einer Überhitzung führt. Ferner sind Effekte bekannt, wonach der Halbleiterkristall auf Grund der mechanischen Belastung bei hohen, schnellen Temperaturhüben brechen kann.

Der Erfindung liegt die Aufgabe zugrunde, eine Schaltung anzugeben, mit der Überlastströme auf einen vorgebbaren Wert begrenzt werden können und den auftretenden Spitzenwert des Kurzschlussstroms ($I_{KS,max}$) vorgebbar und der Betriebstemperatur nachgeführt zu beschränken.

Erfindungsgemäß geschieht dies mit einer elektronischen Sicherung gemäß Anspruch 1.

Vorteilhafte Ausgestaltungen ergeben sich aus den Unteransprüchen.

Ein Vorteil der erfindungsgemäßen Lösung liegt im verbesserten Ansprechverhalten der elektronischen Sicherung im Vergleich zu bekannten schaltenden Ausführungen und gleichzeitig in einer verringerten Komplexität gegenüber begrenzenden elektronischen Sicherungen. In schaltenden elektronischen Sicherungen wird der maximale Kurzschlussstrom von parasitären ohmschen Widerständen (Kupferkabel, RDS,on des FET, ohmsche Verluste Sicherung, Kurzschlussimpedanz, etc.) begrenzt. Derlei hohe Stromspitzen verursachen Rückwirkungen auf das dahinterliegende System einschließlich der Stromversorgung, sodass unter ungünstigen Umständen eine Beeinträchtigung der Anlage stattfindet. Die Selektivität im Fehlerfall kann nicht unter allen Umständen gewährleistet werden. Derlei Rückwirkungen werden durch die Beschränkung des Kurzschlussspitzenwerts $I_{KS,max}$ vermieden.

Besonders vorteilhaft dabei ist die Temperaturnachführung der Auslöseschwelle. Diese ermöglicht den sicheren Betrieb über einen weiten Temperaturbereich und umgeht Schwierigkeiten in der Auslegung der bekannten Lösungsansätze.

Durch die lineare Begrenzung wird eine Überlastung der speisenden Quellen ausgeschlossen, wodurch ein Einsatz mit leistungsschwächeren Stromversorgungen möglich ist.

Da die lineare Begrenzung auf wenige ms reduziert wird, kann die Schaltung wesentlich einfacher realisiert werden als bekannte begrenzende Topologien. Gleichzeitig kann die Leistungsfähigkeit des Leistungstransistors M1 voll ausgenutzt werden, ohne unnötige Überdimensionierung, welche speziell bei Transistoren im Linearbetrieb nur über sehr große Chipflächen und geringe thermische Übergangswiderstände zum Gehäuse (Leadframe) möglich ist und die Auswahl der Transistoren massiv einschränkt.

Die Erfindung wird anhand von Figuren näher erläutert.

Es zeigen beispielhaft:

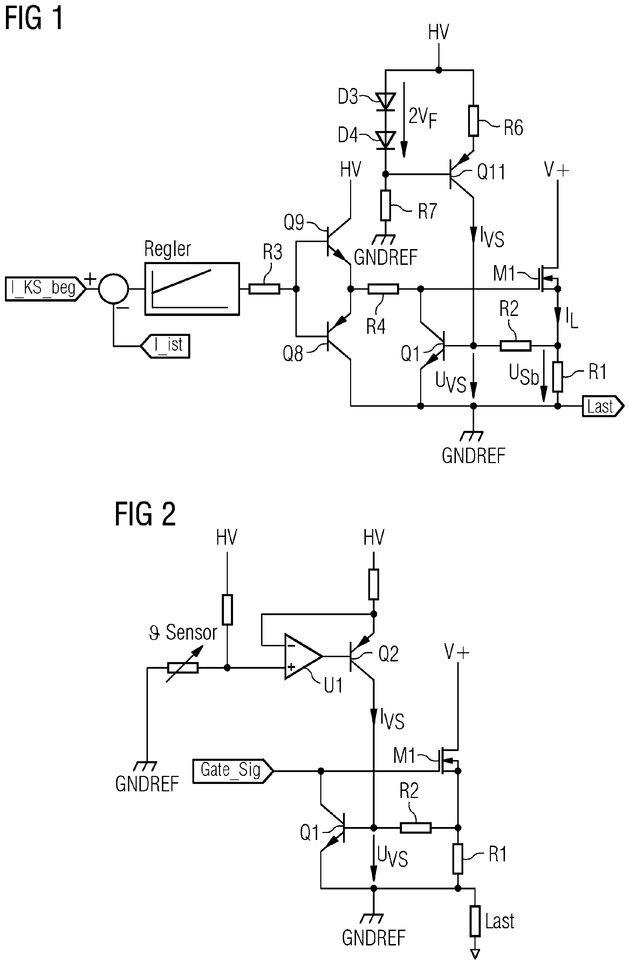

Fig. 1 ein erstes vorteilhaftes Ausführungsbeispiels der erfindungsgemäßen Schaltungsanordnung und Fig. 2 eine erfindungsgemäße Schaltungsanordnung gemäß eines zweiten vorteilhaften Ausführungsbeispiels.

Die Schaltungsanordnung nach Figur 1 umfasst einen, zwischen einer Versorgungsspannung V+ und einer Last, d.h. in einem Laststromkreis angeordneten Leistungshalbleiter M 1, vorzugsweise in der Ausführung als n-Kanal-Metall-Oxid-Halbleiter-Feldeffekttransistor (n-Kanal-MOSFET), dessen Steuereingang (Gate) mit dem Ausgang einer Reglerstufe RS und einem Schaltkontakt eines Schutzschalters Q1 verbunden ist. Beim gegenständlichen Ausführungsbeispiel wird als Schutzschalter ein Silizium-Bipolartransitor vorgesehen. In den Laststromkreis ist zwischen dem Source-Anschluss des MOSFET und der Last überdies ein Shunt-Widerstand R1 eingefügt. Die daran auftretende Spannung $U_{Sh}$ erhöht das Spannungspotential am Steuereingang (der Basis) des Schutzschalters Q1.

Das Ausführungsbeispiel umfasst weiterhin eine Stromquelle SQ, welche über einen Vorwiderstand R2 eine Vorspannung am Steuereingang, der Basis des Schutzschalters Q1 erzeugt und einen negativen Temperaturkoeffizienten aufweist, sodass auch die Vorspannung an der Basis des Schutzschalters einen negativen Temperaturkoeffizienten aufweist.

Gebildet wird die Stromquelle SQ durch einen Halbleiterschalter Q11, beispielsweise einen weiteren Bipolartransistor, dessen Spannungspotential am Steuereingang (Basis) über einen aus Dioden D3, D4 und einem weiteren Widerstand R7 gebildeten Spannungsteiler temperaturabhängig gestaltet ist.

Dabei wird davon ausgegangen, dass sich die Schwellspannung einer Silizium-Diode mit veränderlicher Temperatur gleichartig verhält, wie die Basis-Emitter-Strecke eines Silizium-Bipolar-Transistors. Werden daher die Dioden D3, D4 der Stromquelle SQ thermisch gut an den Schutzschalter Q1 angebunden, so kann von einem thermisch gleichartigen Verhalten ausgegangen werden.

Die seriell geschalteten Dioden D3 und D4 der Stromquelle dienen als Spannungsreferenz für den Vorgabestrom $I_{VS}$ gemäß

$$I_{VS} = \frac{2V_F - U_{BE,Q11}}{R6}$$

Mit $V_F$ als der an den Dioden D3 und D4 abfallenden Spannung, $U_{BE,Q11}$ der Basis-Emitterspannung des weiteren Halbleiterschalters Q11 und R6 dem Kollektorwiderstand des weiteren Halbleiterschalters Q11.

Dieser Vorgabestrom $I_{VS}$ fließt über Vorwiderstand R2 und Shunt-Widerstand R1 und erzeugt die Vorspannung $U_{VS}$ an der Basis des Schutzschalters Q1. Durch entsprechende Dimensionierung des Vorwiderstandes R2 kann unter der Annahme von R2 >> R1 die Vorspannung in guter Näherung durch

$$U_{VS} = I_{VS} \cdot R2$$

vorgegeben und damit der notwendige Laststrom $I_L$ durch den Leistungshalbleiter M1 zum Erreichen der Schwellspannung zur Strombegrenzung $I_{KS,max}$ eingestellt werden. Bei Erreichen der Schwellspannung wird der Schutzschalter Q1 leitend und das Steuersignal des Leistungshalbleiters M1 kurzgeschlossen.

Die Schwellspannung des Schutztransistors Q1, bspw. als BJT ausgeführt, ist weiterhin temperaturabhängig und sinkt mit - 2mV/K bei steigender Temperatur. Bei entsprechender thermischer Kopplung von Q1, Q11, D3 und D4 kann davon ausgegangen werden, dass alle dieselbe Bauteiltemperatur oder zumindest dieselbe Temperaturerhöhung im Betrieb aufweisen. Da es sich bei allen relevanten Bauteilen um Siliziumbauteile handelt, haben auch alle denselben Temperaturdrift von -2mV/K. Der Gleichung des Konstantstroms $I_{VS}$ folgend wird der Temperaturdrift von Q11 mit -2mV/K durch 2VF mit -4mV/K überkompensiert. Dadurch sinkt der Strom $I_{VS}$ mit steigender Temperatur, wodurch sich bei entsprechender Dimensionierung des Basiswiderstands R2 auch die Vorspannung $U_{VS}$ verringert. Das Absinken der Auslöseschwelle des Schutztransistors Q1 wird dadurch kompensiert. Das Prinzip der gesteuerten Stromquelle zur Anpassung der Auslöseschwelle der Kurzschlussstrombeschränkung kann auf weitere Betriebslagen ausgeweitet werden. Der Regler und der Regelzusatz können auf verschiedene Betriebsbedingungen angepasst werden, sodass unterschiedliche Auslösecharakteristiken vorgegeben werden können, wobei die SOA des Leistungshalbleiters die Belastungsgrenzen vorgibt. Durch Anpassung des Sollwerts für den Begrenzungsstroms $I_{KS,beg}$ und des Vorgabestroms $I_{VS}$ ist eine Anpassung während des laufenden Betriebs möglich. Damit lassen sich verschiedene Erkennungs-, Test- oder Inbetriebsetzungsszenarien verwirklichen.

Eine weitere vorteilhafte Ausführungsform der Erfindung ist in Fig. 2 dargestellt.

Hierbei umfasst die Stromquelle SQ mit negativem Temperaturkoeffizienten einen Temperatursensor, mittels welchem ein Spannungssignal an einen Operationsverstärker geliefert wird, der wiederum einen Halbleiterschalter ansteuert.

Grundsätzlich sind für die erfindungsgemäße Lösung auch weitere Ausführungen von temperaturgesteuerten Stromquellen denkbar. Wesentlich ist dabei lediglich, dass die nichtverhinderbare Temperaturabhängigkeit des Stroms durch den Schutzkontakt und des Steuereingangs des Schutzschalters Q1 mittels einer Stromquelle SQ kompensiert wird, welche über ein Netzwerk aus Widerständen und temperaturabhängigen Hableitern D1, D2 eine Vorspannung am Steuereingang des Schutzschalters Q1 erzeugt und einen Temperaturkoeffizienten aufweist, der der Temperaturabhängigkeit des mindestens einem, als Schutzkontakt eingesetzten Halbleiters entgegenwirkt und ein im Wesentlichen thermisch nicht abhängiges Ansprechverhalten des Schutzschalters bewirkt.

**Patentansprüche**

1. Elektronische Schaltungsanordnung zur Strombegrenzung in einem Laststromkreis, mit einem zwischen einer Versorgungsspannung und einer Last angeordneten Leistungshalbleiter (M1), dessen Steuereingang mit dem Ausgang einer Reglerstufe (RS) und einem Schaltkontakt eines Schutzschalters verbunden ist, **dadurch gekennzeichnet, dass** in den Laststromkreis ein Shunt-Widerstand (R1) eingefügt ist und die daran auftretende Spannung das Spannungspotential am Steuereingang des Schutzschalters erhöht, dass mit dem Steuereingang des Schutzschalters weiterhin eine Stromquelle (SQ) verbunden ist, welche über einen Vorwiderstand (R2) eine Vorspannung am Steuereingang des Schutzschalters (Q1) erzeugt und dass die Stromquelle (SQ) einen negativen Temperaturkoeffizienten aufweist.

2. Elektronische Schaltungsanordnung nach Anspruch 1, **dadurch gekennzeichnet, dass** der Leistungshalbleiter (M1) als Metall-Oxid-Halbleiter-Feldeffekttransistor ausgeführt ist.

3. Elektronische Schaltungsanordnung nach Anspruch 1 oder 2, **dadurch gekennzeichnet, dass** die Stromquelle (SQ) einen Halbleiterschalter (Q2) umfasst, dessen Spannungspotential am Steuereingang mittels temperaturabhängigem Spannungsteiler festgelegt ist.

4. Elektronische Schaltungsanordnung nach Anspruch 1 oder 2, **dadurch gekennzeichnet, dass** die Stromquelle (SQ) einen Halbleiterschalter (Q11) umfasst, dessen Spannungspotential am Steuereingang über einen aus Dioden (D3, D4) und Widerständen gebildeten Spannungsteiler temperaturabhängig gestaltet ist.

## FIG 1

## FIG 2

Europäisches
Patentamt

European
Patent Office

Office européen
des brevets

# EUROPÄISCHER RECHERCHENBERICHT

Nummer der Anmeldung

EP 22 15 2566

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | MARROQUI DAVID ET AL: "LVDC SiC MOSFET Analog Electronic Fuse With Self-Adjusting Tripping Time Depending on Overcurrent Condition", IEEE TRANSACTIONS ON INDUSTRIAL ELECTRONICS, IEEE SERVICE CENTER, PISCATAWAY, NJ, USA, Bd. 69, Nr. 8, 23. August 2021 (2021-08-23), Seiten 8472-8480, XP011901818, ISSN: 0278-0046, DOI: 10.1109/TIE.2021.3104606 [gefunden am 2022-03-03] * das ganze Dokument * ----- | 1-4 | INV. H02H9/02 H02H3/05 H02H3/087 H02H3/02 |
| A | US 2018/048140 A1 (TAKUMA TORU [JP] ET AL) 15. Februar 2018 (2018-02-15) * Zusammenfassung; Abbildungen 2,6,8 * * Absätze [0063] – [0080] * ----- | 1-4 | |
| A | EP 0 766 362 A2 (MOTOROLA INC [US]) 2. April 1997 (1997-04-02) * Zusammenfassung; Abbildung 1 * ----- | 1-4 | RECHERCHIERTE SACHGEBIETE (IPC) H02H |

Der vorliegende Recherchenbericht wurde für alle Patentansprüche erstellt

| Recherchenort | Abschlußdatum der Recherche | Prüfer |
|---|---|---|
| München | 5. Juli 2022 | Palukova, Mila |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument
.......................................................................
& : Mitglied der gleichen Patentfamilie, übereinstimmendes Dokument

EPO FORM 1503 03.82 (P04C03)

**ANHANG ZUM EUROPÄISCHEN RECHERCHENBERICHT**
**ÜBER DIE EUROPÄISCHE PATENTANMELDUNG NR.**

EP 22 15 2566

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

05-07-2022

| Im Recherchenbericht angeführtes Patentdokument | Datum der Veröffentlichung | Mitglied(er) der Patentfamilie | Datum der Veröffentlichung |
|---|---|---|---|
| US 2018048140 A1 | 15-02-2018 | JP 6712199 B2 | 17-06-2020 |
| | | JP 2018026963 A | 15-02-2018 |
| | | US 2018048140 A1 | 15-02-2018 |
| | | US 2020251894 A1 | 06-08-2020 |
| | | US 2022158436 A1 | 19-05-2022 |
| EP 0766362 A2 | 02-04-1997 | CA 2179466 A1 | 30-03-1997 |
| | | CN 1153413 A | 02-07-1997 |
| | | EP 0766362 A2 | 02-04-1997 |
| | | JP H09121444 A | 06-05-1997 |
| | | KR 970018897 A | 30-04-1997 |
| | | US 5684663 A | 04-11-1997 |

EPO FORM P0461

Für nähere Einzelheiten zu diesem Anhang : siehe Amtsblatt des Europäischen Patentamts, Nr.12/82

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 2002082611 A2